Europäisches Patentamt

(19) European Patent Office

Office européen des brevets

(11) Publication number: **0 085 565**
A1

(12) **EUROPEAN PATENT APPLICATION**

(21) Application number: **83300481.5**

(22) Date of filing: **31.01.83**

(51) Int. Cl.³: **F 16 K 5/06**

(30) Priority: **01.02.82 US 344903**

(43) Date of publication of application:
**10.08.83 Bulletin 83/32**

(84) Designated Contracting States:
**AT BE CH DE FR IT LI LU NL SE**

(71) Applicant: WORCESTER CONTROLS CORPORATION
125 Hartwell Street
West Boylston Massachusetts 01583(US)

(72) Inventor: Gonzalez, Ricardo
6 Duxbury Drive
Holden Massachusetts 01520(US)

(74) Representative: Wisher, Michael Frederick et al,
Urquhart-Dykes & Lord Archdeaconry House Gravel
Walk
Peterborough, Cambs. PE1 1YU(GB)

(54) Plug valves.

(57) A ball-type plug valve of the floating kind has the ball
(12) thereof supported within a housing cavity by a pair of
spaced seats (18,19) at least one of which comprises a
metallic material and is formed with a V-shaped flow-
through opening (20) for co-operation with the circular
cross-section bore (15) of the ball (12). The other seat may be
of conventional design having a circular flow-through open-
ing, or it may be also formed with a V-shaped flow-through
opening (20). When both seats are formed with V-shaped
openings, the openings can be of the same or different
shapes and sizes. By proper selection of the shape and size of
the openings in the two seats the pressure drop characteris-
tics of the valve can be tailored for a particular application,
and cavitation locations can be shifted to positions either
downstream of the valve or within the ball cavity.

Fig.2

EP 0 085 565 A1

Croydon Printing Company Ltd.

- 1 -

TITLE:  PLUG VALVES

This invention relates to plug valves such as ball valves and conical valves.

When a conventional soft-seated ball-type plug valve is used to vary the rate of a fluid flow there are at least four aspects of performance in which such a valve requires improvement.  These aspects include:

a.  Temperature - soft seating materials are limited in their permissible operating temperatures, and exhibit inherent limitations due to softening, melting, and excessive expansion and contraction when subjected to  excessive temperatures;

b.  Pressure drop - due to their relatively low structural strength, soft seating materials are limited in respect of their pressure drop capabilities.  In addition, the high recovery considerations of standard ball valves places a limitation on the maximum pressure drop which can be exhibited across a ball valve;

c.  Rangeability - because of their geometry, standard ball valves are limited in rangeability (ratio of maximum to minimum controllable flow rate), and exhibit relatively low rangeability. This condition is created by the overlap of two circular shapes, ie. the circular cross-section of the bore through the ball, and the circular cross-section of the flow-through opening of the seat or seats with which the ball co-operates. The relative change in net flow area in standard ball valves per degree of rotation near the shut off position is too high to allow good control near the shut off position, whereby rangeability is seriously reduced;

d. Characterisation (change of flow-rate per degree of valve turn) - the circular port shape of standard ball valves makes it possible to provide only one characteristic.

For these reasons, conventional ball-type plug valves are not usually employed to provide stepless variation, or modulation, of fluid flow rate, and instead are usually employed in applications where only on-off operation is to be effected. Stepless variation or modulation of fluid flow rate is usually effected by other types of valve eg. spool valves or conventional rising stem control valves.

While rising stem control valves are capable of effecting good flow control, and have certain other merits which are not present in conventional rotary ball-type plug valves, rising·stem valves exhibit a number of disadvantages. These include a tendency to be comparatively large in size and heavy in weight, a tendency to be subject to the problem of reciprocating stem packing leakage, a tendency to leak after a period of operation due to a build-up of contaminants under the plug, or due to wear of the plug and/or seat, and a tendency to stick after idle periods.

In an effort to obviate some of the disadvantages of rising stem control valves, while retaining some of the advantages of such valves, modified valves of the rotary type have been proposed, such as a valve including a trunnion-mounted hemipherical plug having a shaped or "characterised" leading edge, or a trunnion-mounted plug having a solid hemipherical face that engages an orifice plate which is provided with a shaped or characterised flow-through opening. While such valves can be characterised, they do not have the capability of reduced capacity trim ie. precise control at low flow rates. Moreover, especially in those cases where the characterisation is effected by providing the plug itself with a shaped leading edge, the valve is difficult to manufacture and is relatively costly.

An even greater disadvantage of such rotary valves is that they are "high recovery" valves providing minimum pressure drop when fully opened, and inherently lack a means for introducing increased fluid-to-metal friction, and rely more heavily than rising stem valves do on fluid-to-fluid friction to dissipate energy with the result that they exhibit more cavitation at lower pressure drops than do rising stem valves. Further, since rotary stem valves of the type previously proposed are single-seated valves, the total pressure drop across the valve occurs at a single point, and takes place in a single step, with the result that if the pressure falls below the vapour pressure of the fluid, cavitation effects will necessarily occur in the downstream pipeline regardless of whether the single seat in the valve is located on the upstream or downstream side of the valve plug. Consequently, cavitation tends to cause errosion of the downstream pipeline in the system, rather than of the valve plug itself - which would be much easier and cheaper to replace than an entire section of the downstream pipeline.

An object of the present invention is to mitigate or overcome at least some of these disadvantages of prior art valves and/or to provide a plug valve offering improved flow characteristics such as improved rangeability, and/ or reduced trim, and/or cavitation avoidance and control.

According to the invention there is provided a plug valve as defined in the accompanying claims.

In an embodiment of the invention described below, one of the seats of a ball valve is replaced by a seat comprising a metallic material, and formed to define a flow-through opening which is generally V-shaped.

The apex of the V is disposed along a line which is at right angles to both the axial flow passage through the ball as well as to the axis of rotation of the ball, i.e. along a line which corresponds to the path of movement of the axial bore through the ball as the ball is rotated about its axis of rotation, whereby the effective fluid flow passage between the seat ring and the bore in said ball is defined by the extent to which the circular cross-section at the end of the bore in the ball adjacent to said seat ring overlaps the V-shaped opening in said seat ring as the angular position of the bore through the ball is varied about the axis of rotation of the ball.

The ball, which is of the floating type, i.e. it is adapted to shift in position in upstream and downstream directions in response to changes in differential pressure across the ball, may be supported between two seat rings each of which exhibits a V-shaped flow-through passage of the general type described, with the Vs of these two flow-through openings being oriented in opposite directions relative to one another and relative to the axial flow passage through the ball valve. The V-shaped flow-through openings in these two seat rings may, moreover, be of the same size and/or shape, or of differing sizes and/or shapes respectively, thereby to tailor the flow characteristics through the ball valve to a particular application under consideration. Alternatively, the differing sizes and shapes of the flow-through openings in the two seat rings respectively may be accomplished by using one seat ring having a V-shaped opening which is disposed adjacent either the upstream or downstream side of the ball as may be required by a given application, while the other seat ring is of generally standard configuration, i.e. of annular shape defining a substantially circular flow-through opening.

The rotary flow control valves of the described embodiments allow either or both characterized flow and reduced capacity trim. More particularly, with respect to the characterized flow characteristics of the valve, the shape of the opening in the valve seats can be widely varied, producing more or less "quick opening" characteristics. With respect to the reduced trim characteristics of the invention, seats ranging from standard trim to very small (e.g. ten percent of standard) can be readily interchanged in a pipe-sized body, while always using the same standard ball.

The seats are sufficiently rigid to be self-supporting, allowing a multitude of porthole shapes to be provided within the same valve cavity. The seat material preferably comprises a sintered particulate metal body whose interparticulate spaces are completely filled with a cured polymeric material, eg. of the type described in our prior pending European patent application number 82 304852.5, the disclosure of which is incorporated herein by reference. The metal body may comprise stainless steel or bronze and the polymeric material preferably comprises polytetrafluoroethylene. This material is highly abrasion resistant, a characteristic of most stainless steels, and exhibits the ability to burnish in and improve its sealing capability with use. The rigidity and good sealing characteristics produce excellent low end control, greatly enhancing the rangeability of the valve in comparision to prior art soft-seated ball valves, and indeed producing rangeability which is competitive with that exhibited by rising stem valves.

The rotary valve of the described embodiment is double seated, providing two pressure drop locations which need not be of the same shape or size, as contrasted for example with the prior art single seated, trunnion mounted rotary plug valves of the prior art referred to above. By using such a double seated construction, more energy is dissipated as fluid to metal friction in the present invention, and by proper shape/size of the two seats, the location of cavitation in the valve can be shifted to desired positions within the fluid flow system, e.g. so that it occurs within the ball cavity or, alternatively, downstream of the valve. Appropriate selection of the shape/size of the flow-through opening in the two seats, and the positioning of the same or differently sized or shaped seat openings relative to one another and relative to the ball, thus permits one to control or avoid cavitation effects within a fluid flow system employing the rotary flow control valve of the present invention.

Embodiments of the invention will now be described by way of example with reference to the accompanying drawings in which:

Fig 1 is a cross-section of a rotary flow control valve constructed in accordance with the present invention;

Fig 2 is a cross-section of the valve, taken on line 2-2 of Fig 1;

Fig 3 is a plan view of a seat ring having a V-shaped opening in accordance with the present invention;

Fig 4 is a cross-section of the seat ring taken on line 4-4 of Fig 3; and

Figs 5-11 are curves showing the pressure drop characteristics of rotary control valves constructed in accordance with the present invention.

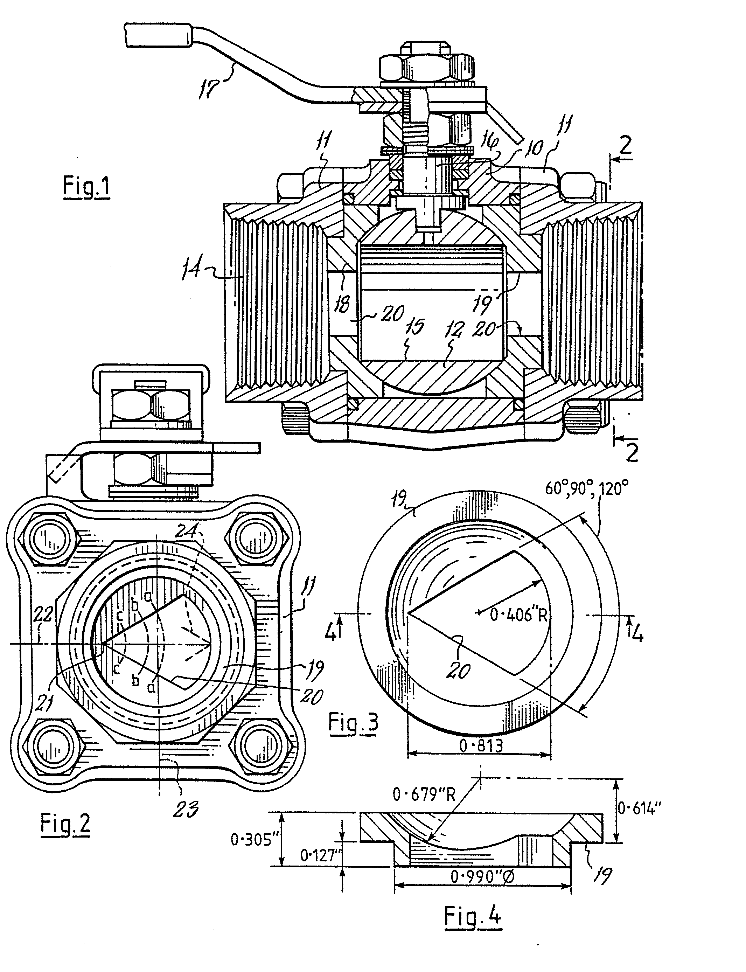

Referring initially to Figures 1 and 2, a rotary control valve constructed in accordance with the present invention comprises a metallic valve body 10 having a pair of pipe ends 11 bolted to opposing ends thereof to define an interior cavity which contains a ball 12. The ball cavity communicates with a pair of fluid flow channels 13, 14, either of which may be a fluid inlet while the other is a fluid outlet inasmuch as the valve is bidirectional in operation, to define an axial flow passage which extends through the housing; and ball 12 in turn includes an axially directed bore 15 of substantially circular cross-section extending through the ball. The ball is mounted for rotation about an axis of rotation that extends transverse to the axial flow passage 13, 14, e.g. by means of a stem 16 which is in engagement with the ball and which is adapted to be rotated by means such as a handle 17, whereby the axial bore 15 in ball 12 may be displaced between positions which are in alignment with and at various angles transverse to the axial flow passage, thereby to control the flow of fluid through the housing.

Ball 12 is supported between a pair of seat rings 18, 19 which are mounted within the housing of the ball valve in spaced relation to one another adjacent the upstream and downstream sides respectively of the aforementioned interior cavity in the valve housing. As best illustrated in Figure 1, ball 12 is not trunnion mounted and, instead, is supported by seat rings 18, 19 for floating operation, i.e. when the ball has been turned to its closed position the ball is adapted to shift in a downstream direction in response to the pressure difference between the upstream and downstream sides of the valve.

The foregoing general construction is in itself well known. However in accordance with the present invention, at least one of the seat rings 18, 19 is fabricated of a metallic material, e.g. a sintered metal/polymer impregnated material of the type described in our aforementioned prior copending European application 82 304852.5 and is configured to provide a substantially V-shaped flow through opening 20 therein (See Fig. 2). The apex 21 of the V-shaped opening is located on a line 22 which is at right angles to the axis of rotation 23 of the ball, and at right angles to the axial flow passage 13, 14 through the valve housing, whereby the effective fluid flow passage between the seat ring and the bore 15 in ball 12 is defined by the extent to which the circular cross-section of the bore overlaps the V-shaped opening 20 in the seat ring. This is diagrammatically shown in Figure 2 by the broken lines a-a, b-b, and c-c which represent three different positions of the bore 15 in ball 12 as the ball is rotated toward a closed position. For each of these positions, the effective flow-through opening is defined by the interface between a V-shaped orifice and a round orifice, and this provides for a much better control of flow area per degree of rotation of the ball near the shutoff position of the ball than can be effected in a conventional ball valve wherein effective flow control area depends on the interface between two circular orifices.

The foregoing discussion relates, of course, to the interface between one end of the circular bore 15 in ball 12 and the V-shaped opening in the seat ring adjacent that end. When both rings 18, 19 are provided with V-shaped openings, the apex of the opening in the other of the seat rings is oriented in a direction opposite to that of opening 20, e.g. as shown by broken line 24, to effect an analogous flow control operation at the other end of the bore 15.

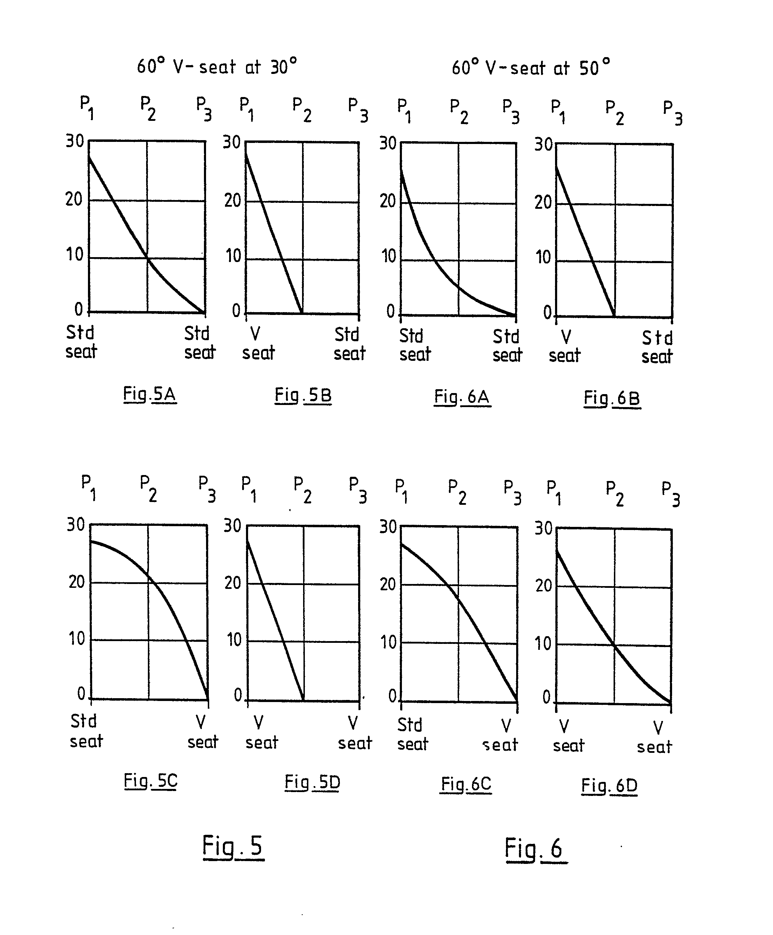

Figures 3 and 4 depict the configuration of a typical seat 19 constructed in accordance with the present invention. In these figures, various dimensions are given for a one-inch powder metal seat which has been constructed in accordance with a preferred embodiment of the invention. The various dimensions, radii, etc. set forth in these figures may be varied, however, without departing from the present invention. Moreover, as noted in Figure 3, the angle of the V-shaped opening 20 in the seat may assume various different values. In a preferred embodiment of the invention, the seats may be provided with openings 20 that have an angle of 60°, or 90°, or 120°; and certain characteristics of the ball valve employing seats having seats having these specific dimensions will be discussed by reference to the curves of Figures 5 - 10. In addition, as will become apparent from the subsequent discussion, one of the seats may be fabricated of a metallic material and be provided with a V-shaped opening, while the other seat is fabricated of a conventional material such as Teflon and has a circular orifice; or both seats may be fabricated of a metallic material and be provided with a V-shaped opening, with the the V-shaped openings in the two seats having the same angle, or defining different angles respectively, in dependence upon the flow characteristics which are to be achieved; and various mixes of these configurations can be employed, e.g. V-shaped and circular orifice openings can be differently disposed relative to the upstream and downstream sides of the valve, and relative to one another, as may be required in given applications.

In order to appreciate certain of the foregoing considerations more fully, reference is initially made to Figure 11 which depicts the pressure drop across a valve of the general type with which the present invention is concerned. If it be assumed that the upstream pressure applied to the valve is $P_1$, and fluid flows through a restricted orifice at the upstream side of the valve, its velocity increases and, accordingly, its pressure decreases to a pressure $P_2$. As the fluid flows through a restricted orifice at the downstream side of the valve, the pressure $P_2$ further decreases to a downstream or outlet pressure $P_3$. If, in the course of one of these pressure drops, e.g. $P_1 - P_2$, the pressure drop goes below the vapor pressure of the fluid, at least a portion of the fluid will flash into vapor. When the pressure recovers to the downstream pressure $P_3$, above the vapor pressure of the fluid, vapor will implode to a liquid form, causing erosion on the adjacent portion of the flow system as a result of cavitation. If this implosion occurs downstream of the valve, the cavitation will cause severe wear on the downstream pipeline. If the implosion occurs within the valve itself, the cavitation will cause erosion of the valve ball. This latter condition is preferred over the former condition since, if wear is to occur as a result of cavitation, it is more desirable that the wear occur in the ball rather than in the downstream pipeline inasmuch as it is much easier to replace the ball of the valve than it is to replace an entire section of downstream pipeline.

Cavitation, the effects of cavitation, and the concept of controlling pressure drop to eliminate cavitation or to minimize the effects of cavitation, are in themselves well known concepts and have been used in many valve and piping systems in the past. However, none of these prior systems were able to control the effects of cavitation in a ball valve, and one of the primary advantages of the present invention is its capability of controlling the effects of cavitation in a ball valve environment. By using a double seated arrangement which provides two pressure valve locations, the total pressure drop is distributed between two points in the valve thereby to reduce the total pressure drop at any given point, resulting in less cavitation, less wear and less noise; and, even more importantly, by appropriate selection of the sizes and/or shapes of the orifices in the upstream and downstream seat rings, the effects of cavitation can be more accurately controlled. For example, by using a pair of V-seats, and by appropriate selection of the sizes of the openings therein and the placement of these seats relative to the upstream and downstream sides of the ball, it is possible to control the pressure drop increments across the ball to assure, for instance, that any drop in upstream pressure below vapor pressure and recovery to a pressure above vapor pressure occurs within the ball rather than in the downstream pipeline.

Figure 5A shows the pressure drop characteristics of a ball valve which employs a pair of standard seats, e.g. fabricated of Teflon, adjacent its upstream and downstream sides; Figure 5B shows the flow characteristics when the same valve is provided with a V-seat at its upstream side, and a standard seat on its downstream side; Figure 5C shows the flow characteristics which are achieved when the seats are reversed in position, i.e. the standard seat is provided on the upstream side of the valve and a V-seat is provided on the downstream side of the valve; and Figure 5D shows the pressure drop characteristics which are achieve when two V-seats are provided at the upstream and downstream sides of the valve respectively. All of these curves assume that the ball of the valve has been rotated to achieve a 30° opening, i.e. the valve is one third open and that, moreover, the V-seat(s) employed has an orifice which exhibits an angle of 60°.

Figure 6 shows the pressure drop characteristics which are achieved across the same valve configurations which are referred to in Figure 5, but with the ball turned sufficiently to achieve a 50° opening, i.e. the ball valve is slightly more than one half open, inasmuch as the ball must be turned to 90° to achieve full opening or full closure.

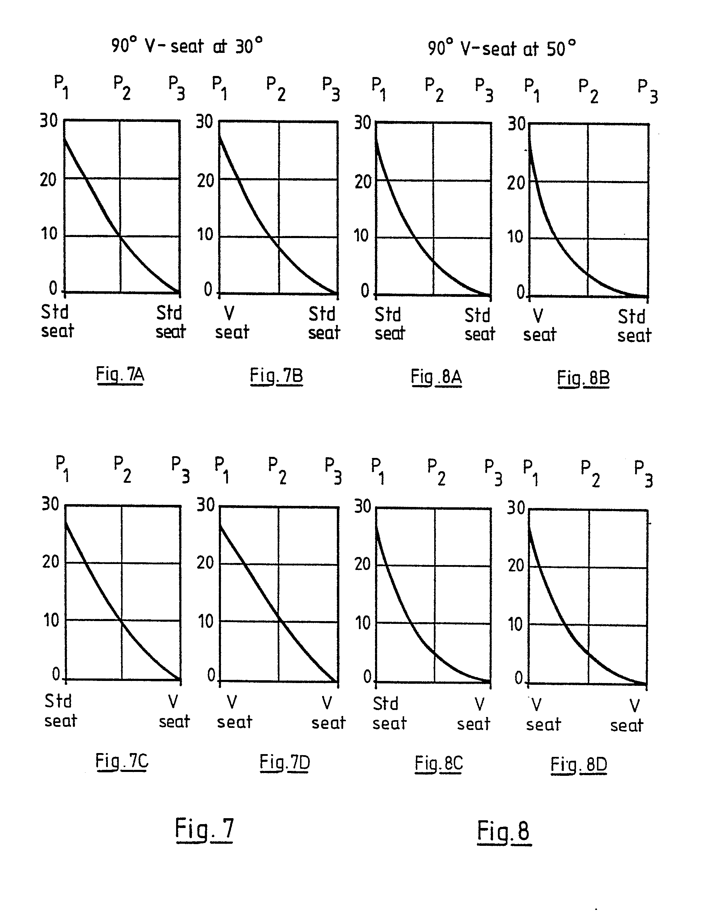

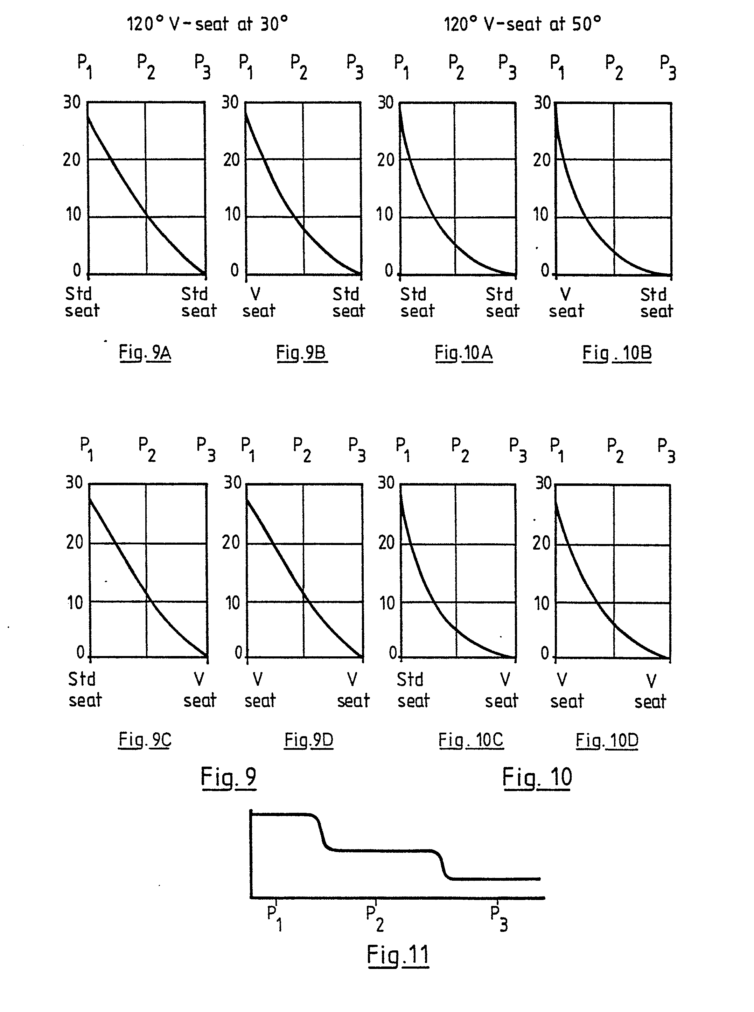

Figures 7 and 8 correspond respectively to Figures 5 and 6, with respect to valve configurations and degree of opening, but show the pressure drop characteristics which are achieved when the V-seat(s) has a 90° orifice. Figures 9 and 10 correspond to Figures 5 and 6, and to Figures 7 and 8, respectively, but show the characteristics of the various valve configurations at the specified degrees of opening when the V-seat(s) has a 120° orifice. Analogous curves could be provided for the ball valve at other degrees of opening, and for similar such ball valves employing one or two V-seats that exhibit characterized orifices having shapes and angles other than those of Figures 5-10, and also for such valves wherein the shape and/or size and/or angle of the upstream seat is different from the corresponding parameters of the downstream seat. It should be understood, therefore, that Figures 5-10 are typical only, and have been presented simply to illustrate the type of pressure drop control which can be achieved across a ball valve by appropriate attention to the disposition and configuration of the two seat rings relative to one another.

Merely by way of example, Figure 6A shows that when a ball valve of the floating type employing two standard seats, each fabricated of a material such as Teflon and each having a conventional circular opening, is opened to 50°, most of the pressure drop $(P_1 - P_2)$ occurs across the upstream seat, and a lesser portion of the total drop $(P_2 - P_3)$ occurs across the downstream seat. Figure 6B, in contrast, shows an arrangement wherein the upstream seat is a V-seat of the type described, and the downstream seat is a standard seat having a circular opening. In this arrangement, the total pressure drop $(P_1 - P_2)$ occurs across the upstream seat, and there is no pressure drop across the downstream seat (i.e. $P_2 = P_3$). If the seat dispositions referred to in Figure 6B should be reversed, e.g. as shown in Figure 6C, a significant portion (more than one half) of the total pressure drop occurs across the downstream V-seat, with the remaining lesser amount occurring across the upstream standard seat. Moreover, if the upstream and downstream seats are each of V-shape, as shown in Figure 6D, more than one half of the pressure drop occurs across the upstream seat, while the remainder of the pressure drop occurs across the downstream seat.

As will be apparent from the foregoing discussion, and from consideration of the various curves presented in Figures 5 - 10, the nature and extent of the pressure drop at the upstream and downstream sides of the ball can be controlled by using a pair of seats at least one of which is a V-seat, and by selecting the location of that seat relative to the upstream or downstream sides of the valve. Moreover, the curves further illustrate that the pressure drop characteristi. change when the angle of the V-shaped orifice in a given seat or a pair of seats is changed. It is possible therefore to control the characteristics of the pressure drop adjacent a given a V-seat by providing a seat of a specific angle at that point, and it is also possible to control the pressure drops at the upstream and downstream sides of the valve by having V-seats of different angles at the upstream and downstream sides respectively.

As noted earlier, V-seats constructed in accordance with the present invention may be provided, for example, with angles of 60°, or 90°, or 110°. It is possible therefore to provide arrangements wherein only one V-seat is provided having an opening of one of these specified angles, with the other seat being a standard seat; or to provide such an arrangement wherein the single V-seat is located at either the upstream side or the downstream side of the valve; or to provide an arrangement wherein both seats are of V-shaped orifice configuration, with the Vs in the two seats having the same angle; or to provide an arrangement wherein the V-shaped orifice in the upstream seat has a different angle from that in the downstream seat, e.g. a 60° opening in the upstream seat and a 90° opening in the downstream seat, or vice versa, etc.

Each of these possible arrangements has its own pressure drop characteristics. Therefore the actual pressure conditions upstream of the ball, downstream of the ball, or within the ball itself can be tailored for a particular application by selecting the number of V-seats which are to be employed, by selecting the angle of the opening in the one (or both) seat employed, and by selecting where that particular seat is to be disposed relative to the ball valve, e.g. on its upstream or on its downstream side.

Among modifications which could be made in the above-described embodiments while remaining within the scope of the present invention are the following. The invention can be applied to plug valves other than ball valves, such as conical valves. Moreover, the valve plug, whether of the ball type or otherwise may be provided with a non-circular section port or bore. The valve plug may be of the non-floating kind, for example it may be trunnioned and provided with a spring-loaded seat. The material of the valve seat members need not be metallic and certain hard synthetic plastics materials may be employed.

CLAIMS:

1    A plug valve adapted to provide stepless variation of fluid flow rate comprising a housing, a valve plug mounted in the housing for angular movement about a plug axis, and at least one valve seat member mounted in the housing for sealing engagement with the housing and the valve plug, and the valve seat member having a flow-through opening for partial or full alignment with a fluid flow bore of said valve plug, characterised in that said flow-through opening in said seat member is generally V-shaped and the flow rate through the valve is varied by varying the overlap of said flow-through opening in said valve plug with said V-shaped opening in said seat member by angular movement of said plug about said plug axis.

2    A plug valve according to claim 1 characterised in that said valve seat member is one of a pair of valve seat members disposed on opposite sides of said valve plug to co-operate therewith, and the size of said generally V-shaped flow-through opening in said one of the valve seat members differs from the size of the flow-through opening in the other of said seat members.

3    A plug valve according to claim 2 characterised in that the shape of the flow-through opening in said one of the valve seat members differs from the shape of the flow-through opening in the other of said seat members.

4    A plug valve according to any one of the preceding claims characterised in that the apex of said V-shaped opening in said valve seat member is located on a line disposed at substantially a right angle to said plug axis and at substantially a right-angle to the direction of flow of fluid through said housing.

5    A plug valve according to claim 2 or claim 3 characterised in that each of said valve seat members is fabricated of a metallic material and has a flow-through opening of general V-shape therein, the apices of the V-shaped openings in said pair of seat members being disposed in opposite directions to one another relative to the direction of flow of fluid through said housing.

6    A plug valve according to claim 5 characterised in that the apices of said V-shaped openings in said valve seat members are each disposed at substantially a right-angle to the plug axis of said valve plug.

7    A plug valve according to claim 5 or claim 6 characterised in that the angles at the apices of said V-shaped openings are substantially equal to one another.

8    A plug valve according to claim 5 or claim 6 characterised in that the angles at the apices of said V-shaped openings in said valve seat members are different from one another.

9    A plug valve according to any one of claims 2 to 4 characterised in that said valve seat member formed with said generally V-shaped opening is disposed at the upstream side of said valve plug, and the other of said valve seat members is of annular configuration and defines a flow-through opening of circular cross-section therethrough.

10    A ball valve adapted to operate in a continuous modulating mode, said ball valve comprising a housing having an interior cavity located between and communicating with a pair of fluid flow channels to define an axial flow passage extending through said housing, a ball located in said cavity, said ball having an axially directed bore of substantially circular cross section extending therethrough, said ball being mounted for rotation about an axis of rotation transverse to said axial flow passage whereby the axis of said bore may be displaced between positions in alignment with and at various angles transverse to said axial flow passage to control the flow of fluid through said housing, a pair of seat rings supported by said housing in surrounding relation to said axial flow passage adjacent the upstream and downstream sides of said cavity for sealing engagement with said housing and ball, said ball being supported in said cavity by said seat rings for floating operation in upstream and downstream directions relative to said pair of fluid flow channels in response to changes in the differential pressure between said pair of fluid flow channels, and at least one of said seat rings being fabricated of a metallic material, characterised in that the flowthrough opening in said one seat being of substantially V-shape whereby the effective fluid flow passage between said seat ring and the bore in said ball is defined by the extent to which the circular cross-section at the end of the bore in said ball adjacent to said seat ring overlaps the V-shaped opening in said seat ring as the angular position of said bore is varied about the axis of rotation of said ball.

Fig.1

Fig.2

Fig.3

60°,90°,120°

0·406"R

0·813

0·679"R

0·614"

0·305"

0·127"

0·990"Ø

Fig.4

0085565

2/4

60° V-seat at 30°

$P_1$    $P_2$    $P_3$    $P_1$    $P_2$    $P_3$

Fig.5A

Std seat ... Std seat

Fig.5B

V seat ... Std seat

Fig.5C

Std seat ... V seat

Fig.5D

V seat ... V seat

Fig. 5

0085565

3/4

90° V-seat at 30°

90° V-seat at 50°

Fig. 7A  Fig. 7B  Fig. 8A  Fig. 8B

Fig. 7C  Fig. 7D  Fig. 8C  Fig. 8D

Fig. 7

Fig. 8

0085565

120° V-seat at 30°     120° V-seat at 50°

Fig.9A          Fig.9B          Fig.10A          Fig.10B

Fig.9C          Fig.9D          Fig.10C          Fig.10D

Fig. 9          Fig. 10

Fig.11

| | DOCUMENTS CONSIDERED TO BE RELEVANT | | EP 83300481.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US - A - 3 563 511 (H. BENTLEY-LEEK)<br>* Fig. 1,3 * | 1 | F 16 K 5/06 |
| A | DE - B1 - 2 732 672 (REGLERBAU HANNEMANN GMBH & CO KG)<br>* Totality * | 1 | |
| A | US - A - 3 403 887 (E.B. MYERS)<br>* Fig. 1,3 * | | |
| A | US - A - 3 542 338 (D. SCARAMUCCI)<br>* Fig. 1,1C * | | |
| A | US - A - 3 700 003 (R.G. SMITH)<br>* Totality * | | TECHNICAL FIELDS SEARCHED (Int. Cl. ³)<br><br>F 16 K 5/00 |

The present search report has been drawn up for all claims

| Place of search | Date of completion of the search | Examiner |
|---|---|---|
| VIENNA | 17-05-1983 | ROUSSARIAN |